Europäisches Patentamt

European Patent Office

Office européen des brevets

(11) Numéro de publication: **0 208 607**
**B1**

(12) **FASCICULE DE BREVET EUROPEEN**

(45) Date de publication du fascicule du brevet:
28.02.90

(21) Numéro de dépôt: 86401454.3

(22) Date de dépôt: 01.07.86

(51) Int. Cl.⁴: **G03B 27/72, H05G 1/44**

(54) **Procédé de détermination automatique de l'exposition d'un film radiographique et dispositif exposeur automatique pour installation de radiodiagnostic mettant en oeuvre ledit procédé.**

(30) Priorité: 04.07.85 FR 8510201

(43) Date de publication de la demande:
14.01.87 Bulletin 87/3

(45) Mention de la délivrance du brevet:
28.02.90 Bulletin 90/9

(84) Etats contractants désignés:
DE GB IT NL

(56) Documents cités:
EP-A- 0 125 349
FR-A- 2 178 529
FR-A- 2 484 638
US-A- 4 143 968
US-A- 4 329 030

K. Mütze, ABC der Optik, 1972, Verlag Werner Dausien, Hanau (DE), page 654

(73) Titulaire: GENERAL ELECTRIC CGR S.A., 100, rue Camille-Desmoulins, F-92130 Issy les Moulineaux(FR)

(72) Inventeur: Bougle, Jean, THOMSON-CSF
SCPI 19, avenue de Messine, F-75008 Paris(FR)
Inventeur: Delair, Jacques, THOMSON-CSF
SCPI 19, avenue de Messine, F-75008 Paris(FR)

(74) Mandataire: Ballot, Paul Denis Jacques et al, Cabinet Ballot-Schmit 7, rue le Sueur, F-75116 Paris(FR)

EP 0 208 607 B1

## Description

La présente invention concerne un procédé de détermination automatique de l'exposition d'un film radiographique, dans une installation de radiodiagnostic dans laquelle le film radiographique coopère avec un écran renforçateur. L'invention concerne en outre un dispositif exposeur automatique, mettant en oeuvre ledit procédé, et utilisé dans une installation de radiodiagnostic du type comportant un film radiographique et un écran renforçateur exposé à un rayonnement X.

Pour que l'image d'un sujet ou objet qui est réalisée sur un film radiographique puisse être exploitée dans les meilleurs conditions, il faut que les différents points qui constituent cette image présentent entre eux un contraste suffisant, c'est-à-dire que le noircissement du film radiographique soit correct, et cela d'une radiographie à une radiographie suivante, malgré les différences d'opacité que peut présenter l'objet radiographié.

Le noircissement du film est lié à son exposition. L'exposition étant le produit de l'intensité du rayonnement auquel est soumis le film radiographique, ou débit de dose, par le temps durant lequel le film est exposé à ce rayonnement.

En général, dans les installations de radiodiagnostic, les films sont exposés selon les deux méthodes suivantes :

- 1°. dans la première méthode les films radiographiques sont exposés directement aux rayons X ayant traversés l'objet radiographié ;
- 2°. dans la seconde méthode, les films sont exposés principalement à une lumière émise par un écran renforçateur ; l'écran renforçateur convertissant les rayons X ayant traversés l'objet radiographié en lumière, par un phénomène de fluorescence. Il est à remarquer que les installations de radiodiagnostics dans lesquelles un film radiographique coopère avec un écran renforçateur, présentent un avantage très important pour un patient soumis à un examen, qui réside en ce que le temps de pose nécessaire pour obtenir une image est beaucoup plus faible (de l'ordre de 10 fois plus faible) que le temps nécessaire avec les films radiographiques exposés directement au rayonnement X ; et en conséquence l'irradiation du patient est diminuée dans un même rapport.

Certaines des installations de radiodiagnostic qui utilisent la première méthode, comportent un exposeur automatique, permettant d'obtenir automatiquement l'exposition correspondant au noircissement correct du film radiographique (exposé directement au rayonnement X).

En général, ces exposeurs automatiques comportent un moyen détecteur, sensible au rayonnement X, et fournissant un courant proportionnel au débit de dose du rayonnement X passant par le film radiographique. Ce moyen détecteur sensible au rayonnement X est généralement constitué soit, par une chambre d'ionisation classique, ou par une cellule à semi-conducteur, ou encore par un écran convertissant les photons X en une lumière qui est conduite jusqu'à un photo-multiplicateur, lequel photo-multiplicateur traduit ladite lumière en un courant électrique I proportionnel au débit de dose. Quelque soit le moyen détecteur utilisé, on intègre dans le temps le courant I proportionnel au débit de dose, à partir du début du temps de pose, et l'on obtient une valeur croissante avec le temps représentant l'exposition intégrée du film. Cette valeur croissante est comparée durant le temps de pose à une valeur de consigne fixe, préalablement établie en fonction des caractéristiques du film. La fin du temps de pose étant commandée à l'instant où la comparaison indique que la valeur représentative de l'exposition est égale à la valeur de consigne.

Ainsi en supposant que le débit de dose du courant I durant le temps de pose T soit constant, l'exposition EX atteinte par le film est égale au produit du débit de dose I par le temps T soit :
EX = I × T.

Dans cette configuration où le film radiographique est directement soumis au rayonnement X, un noircissement constant du film est obtenu d'une pose à une pose suivante, indépendamment de la durée de ce temps de pose, à la condition que le produit du temps de pose T par le débit de dose I soit constant ; le film radiographique exposé directement au rayonnement X obéissant à la loi dite de réciprocité.

La loi de réciprocité indique que la densité optique du film est déterminé par l'exposition intégrée, et est indépendante du temps pendant lequel cette exposition est faite.

Par contre dans le cas des couples écran renforçateur-film radiographique, cette loi de réciprocité n'est plus vérifiée, et l'on note un écart de la loi de réciprocité, qui tend à diminuer le noircissement du film quand le temps de pose T a été augmenté pour conserver le produit I × T constant. Ceci se présentant par exemple d'une radiographie à une radiographie suivante, quand il a été nécessaire, pour les besoins de l'examen, de travailler à une énergie différente pour laquelle il convient de diminuer le débit de dose, c'est-à-dire la valeur du courant I.

Cet écart de la loi de réciprocité, qui peut varier selon le type de film, représente la variation relative de l'exposition nécessaire pour obtenir une densité optique constante, lorsque le temps T d'exposition varie. Par exemple pour une exposition EX = I × T = 1 avec T = 0,1 seconde, pour un noircissement correct du film, l'exposition EX devra passer à environ 1,3 pour un temps de pose T = 1 seconde, et devra passer à environ 2 pour un temps de pose T = 4 secondes.

2

La présente invention concerne un procédé de détermination automatique de l'exposition d'un film radiographique, pour une installation de radiodiagnostic dans laquelle le film coopère avec un écran renforçateur, ledit procédé permettant, pour une large plage de variation du débit de dose, conduisant à des variations du temps de pose, d'obtenir l'exposition du film correspondant au noircissement correct de ce dernier, en éliminant l'effet néfaste procuré par l'écart de la loi de réciprocité. L'invention concerne également un exposeur automatique de films radiographiques pour installations de radiodiagnostic, mettant en oeuvre ledit procédé grâce à un agencement nouveau de moyens simples à mettre en oeuvre.

Selon l'invention, un procédé automatique de détermination de l'exposition d'un film radiographique, dans une installation de radiologie dans laquelle ledit film forme avec un écran renforçateur un couple écran-film exposé à un rayonnement X durant un temps de pose, consistant à générer un courant proportionnel au débit de dose au niveau dudit couple écran-film, et à intégrer dans le temps ledit courant à partir du début dudit temps de pose afin d'obtenir un signal d'exposition ayant une valeur croissante avec le temps et représentant l'exposition dudit couple écran-film, et à appliquer ledit signal d'exposition à un moyen comparateur auquel est également appliqué un signal de consigne afin de comparer les valeurs desdits signaux d'exposition et de consigne, puis à délivrer une commande de fin de pose coupant ledit rayonnement X quand ledit signal d'exposition et ledit signal de consigne ont une valeur sensiblement égale, la différence de valeurs entre lesdits signaux d'exposition et de consigne constituant une valeur de différence décroissante en fonction du temps, est caractérisé en ce qu'il consiste en outre, à partir du début dudit temps de pose, à ajouter à ladite différence de valeurs une valeur additionnelle croissante en fonction du temps selon une loi préalablement prédéterminée.

L'invention sera mieux comprise grâce à la description qui suit, faite à titre d'exemple non limitatif, et aux quatre figures annexées parmi lesquelles :

- la figure 1 montre schématiquement une version préférée d'un dispositif exposeur automatique selon l'invention mettant en oeuvre le procédé de l'invention ;
- la figure 2 montre par des courbes, l'évolution en fonction du temps, de la valeur d'un signal d'exposition et de la valeur d'un signal de consigne ;
- la figure 3 montre une seconde version du dispositif exposeur automatique selon l'invention ;
- la figure 4 montre schématiquement le dispositif exposeur automatique de l'invention selon une réalisation de type numérique.

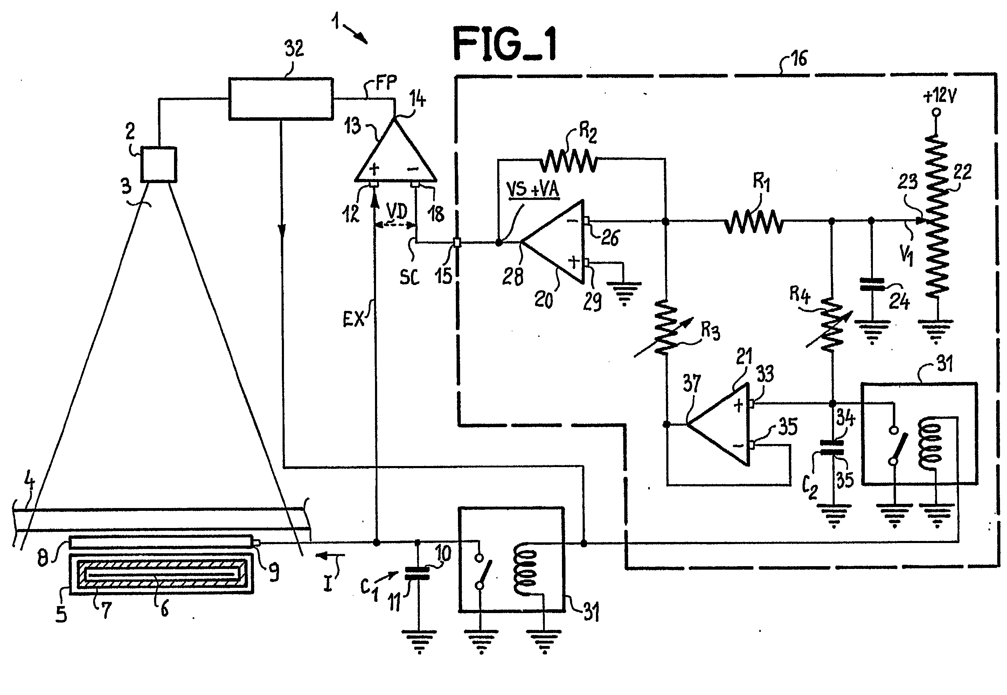

La figure 1 montre de manière schématique un dispositif exposeur automatique 1 selon l'invention, mettant en oeuvre le procédé de l'invention dans une installation de radiodiagnostic.

L'installation de radiodiagnostic, mis à part l'exposeur automatique 1, est d'un type classique. Elle comporte notamment une source de rayonnement X 2, générant en fonctionnement un faisceau de rayons X 3 en direction d'un panneau 4 destiné à supporter de manière connue un patient (non représenté). L'installation de radiodiagnostic comporte en outre, sous le panneau 4, à l'opposé de la source de rayonnement X 2, une cassette 5 renfermant de manière conventionnelle un film radiographique 6 et un écran renforçateur 7 d'un type classique.

L'intensité du rayonnement X, ou débit de dose, passant par la cassette 5, c'est-à-dire au niveau du couple écran-film 6-7, est connue grâce à un moyen détecteur 8 sensible au rayonnement X, d'un type classique, constitué par exemple d'une chambre d'ionisation délivrant par une sortie 9 un courant I proportionnel au débit de dose ; le détecteur 8 étant, dans l'exemple non limitatif décrit, disposé également sous le panneau 4 entre ce dernier et la cassette 5.

Le courant I proportionnel au débit de dose est intégré dans le temps afin d'obtenir, d'une manière en elle-même connue, un signal d'exposition EX ayant une valeur croissante avec le temps, et représentant l'exposition du couple écran-film 7-6. A cette fin, le courant I est appliqué à un moyen intégrateur formé dans l'exemple non limitatif décrit par un condensateur d'intégration C1, destiné à intégrer dans le temps le courant I, c'est-à-dire I durant un temps de pose T pendant lequel le couple écran-film 7-6 est exposé au faisceau de rayons X 3.

Le signal d'exposition EX, développé par la charge du condensateur C1 par le courant I, est appliqué à un moyen comparateur 13 d'un type classique, constitué par exemple par un amplificateur différentiel, la sortie 9 du détecteur 8 étant simultanément reliée à une première borne 10 du condensateur C1 et à une première entrée (positive) 12 du moyen comparateur 13 ; la seconde borne 11 du condensateur C étant dans l'exemple non limitatif décrit reliée à la masse. Le comparateur 13 est en outre relié par une seconde entrée (négative) 18 à une sortie 15 d'un moyen générateur 16 (représenté dans un cadre en traits pointillés), délivrant un signal de consigne SC par rapport auquel doit s'effectuer une comparaison du signal d'exposition EX ; cette comparaison s'effectuant à partir du début du temps d'exposition T, jusqu'au moment où le comparateur 13 détecte que les signaux d'exposition EX et de consigne SC ont sensiblement une même valeur ; le comparateur 13 délivrant alors de manière classique, par une sortie 14, un signal constituant une commande FP de fin temps de pose, permettant par exemple de couper le rayonnement X.

Dans l'art antérieur, le signal de consigne a une valeur fixe durant le temps de pose T, cette valeur fixe étant déterminée en fonction des caractéristiques du film utilisé. La durée du temps de pose est alors directement proportionnelle à la différence de valeurs entre le signal de consigne et le signal d'exposition EX, et inversement proportionnel à la pente selon laquelle augmente le signal d'exposition EX pour atteindre une valeur sensiblement égale à celle du signal de consigne ; cette pente (non représentée) correspondant à une droite si le débit de dose ou courant I conserve une même valeur durant le temps de pose. Aussi, en supposant que le courant ou débit de dose ait une valeur différente d'une pose à une pose suivante, l'exposition atteinte par le couple écran-film à la fin de chaque temps de pose conserve une même valeur où il n'est pas tenu compte de l'écart de la loi de réciprocité.

Dans le procédé selon l'invention, le fonctionnement est fondamentalement différent en ce qu'il consiste, à partir du début du temps de pose T, à augmenter la différence de valeur VD présentée entre la valeur du signal de consigne SC et la valeur du signal d'exposition EX, pour tendre à compenser une diminution de cette différence de valeur apportée par l'accroissement dans le temps de la valeur du signal d'exposition EX. On tend ainsi à ajouter à ladite différence de valeur VD, une valeur additionnelle fonction du temps écoulé, cette valeur additionnelle fonction du temps ayant pour conséquence de retarder l'instant où est obtenu l'égalité entre les valeurs du signal d'exposition EX et du signal de consigne SC, ce qui entraîne un accroissement de la durée du temps de pose T, qui lui-même entraîne un accroissement de l'exposition atteinte par le film à la fin dudit temps de pose T, tendant ainsi à compenser l'écart de la loi de réciprocité.

Dans la réalisation montrée par la figure 1 du dispositif exposeur automatique 1 selon l'invention, la valeur additionnelle croissante en fonction du temps, est superposée à une tension fixe pour former le signal de consigne SC qui est délivré par le dispositif générateur 16, et appliqué à la seconde entrée 18 du comparateur 13 ; le dispositif générateur 16 constituant des moyens pour augmenter ladite valeur de différence selon une loi préalablement établie, à partir du début du temps de pose T.

Dans l'exemple non limitatif décrit, le dispositif générateur 16 comporte un premier et un second amplificateur 20, 21 constituant respectivement de manière classique un sommateur et un amplificateur suiveur; ces deux amplificateurs 20, 21 ainsi que le moyen comparateur 13, étant alimentés de manière classique (non représentés), en + et - 12 Volt par exemple. Dans cette réalisation, le dispositif générateur 16 comporte en outre un potentiomètre 22 ayant une première extrémité reliée à une source de tension positive + E, de + 12 volts par exemple, et une seconde extrémité reliée à la masse. Un curseur 23 du potentiomètre 22 permet d'obtenir une première tension V1, ajustable entre la masse et + 12 volt, cette première tension V1 étant filtrée par une capacité de filtrage 24 reliée entre la masse et le curseur 23. Le curseur 23 est relié par une première résistance R1 à une première entrée (négative) 26 du sommateur 20, cette première entrée 26 étant également reliée, par l'intermédiaire d'une seconde résistance R2, à la sortie 28 du sommateur 20 ; la seconde entrée 29 (positive) du sommateur 20 étant reliée à la masse.

Ceci constitue une configuration classique, la première entrée 26 du sommateur 20 étant sensiblement au potentiel de la masse, la tension à la sortie du sommateur 20 est déterminée par les valeurs des première et seconde résistances R1, R2 et par la première tension V1 au niveau du curseur 23 du potentiomètre 22. Ainsi par exemple, si la première tension V1 au niveau du curseur 23 est de 5 volt, et que la première résistance R1 ait une valeur de 5 KΩ, le courant passant par la première résistance 25 est de 1 mA et, si la seconde résistance 27 a une valeur de 5 KΩ, la tension en sortie 28 du sommateur 20 est de sensiblement 5 volts ; cette valeur constituant dans l'exemple non limitatif décrit la valeur de la tension fixe, appelée valeur de seuil VS, à laquelle va être ajoutée la valeur additionnelle fonction du temps, pour former le signal de consigne SC délivré en 15 du dispositif générateur 16. Dans l'exemple non limitatif de la description, la valeur additionnelle fonction du temps qui est ajoutée à la valeur de seuil SV fixe, grâce au sommateur 20, est généré de manière à varier suivant une loi exponentielle.

Dans l'exemple non limitatif décrit, la variation exponentielle de la valeur additionnelle est réalisée par la charge, à travers une résistance de charge R4, d'un second condensateur C2 ; le second condensateur C2 étant appelé condensateur de charge, dans la suite de la description, pour plus de clarté de cette dernière. Il est à noter que les condensateurs C1, C2 afin d'avoir une charge nulle à l'instant du début du temps de pose T, sont maintenus en court-circuit en dehors de ce temps de pose, par des moyens classiques constitués par exemple par des circuits de relais électromagnétique 31. Les relais électromagnétiques 31 sont reliés, par exemple, à un pupitre de commande 32, tel qu'en comportent de manière conventionnelle les installations de radiodiagnostic. Le pupitre de commande 32 est d'autre part relié à la source de rayonnement X 2 de manière à en commander le fonctionnement, et est relié en outre à la sortie 14 du moyen comparateur 13, afin de recevoir le signal de fin de pose FP que fournit ce dernier quand il détecte que les signaux d'exposition EX et de consigne SC ont sensiblement une même valeur, afin de couper le rayonnement X.

Le condensateur de charge C2 est relié par une première borne 34 à une première entrée 33 (positive) de l'amplificateur suiveur 21, et par l'intermédiaire de la résistance de charge R4, au curseur 23 ; la seconde borne 35 du condensateur de charge C2 étant reliée à la masse. La seconde entrée 35 (négative) et la sortie 37 de l'amplificateur suiveur 21 sont reliées entre elles, et sont reliées en outre par l'intermédiaire d'une troisième résistance R3 à la première entrée 26 (négative) du sommateur 20.

Quand le relais 31 est actionné pour supprimer le court-circuit du condensateur de charge C2, ce dernier se charge à travers la résistance de charge R4, selon une loi exponentielle, la constante de temps de ce circuit étant donnée par la valeur du condensateur de charge C2 et par la valeur de la résistance de charge R4, l'impédance d'entrée de l'amplificateur suiveur 21 étant élevée et négligeable. En supposant que la première tension V1 délivrée par le curseur 23 soit de 5 volts, à la fin de la charge du condensateur de charge C2, la tension développée par ce dernier et appliquée à la première entrée 33

4

EP 0 208 607 B1

(positive) de l'amplificateur suiveur 21 va tendre vers 5 volts ; l'amplificateur suiveur 21 ayant un gain voisin de 1, sa sortie 37 délivrera 5 volts ; en supposant que la troisième résistance R3 ait une valeur de 5 KΩ, le courant dans cette dernière est de 1 mA et s'ajoute, au niveau du sommateur 20, au courant passant par la première résistance R1. On trouve ainsi à la sortie 28 du sommateur 20 une tension de valeur fixe de 5 volts représentant la valeur de seuil VS, à laquelle s'ajoute selon une variation exponentielle la tension engendrée par la charge du second condensateur C2, pour former le signal de consigne SC variable en fonction du temps.

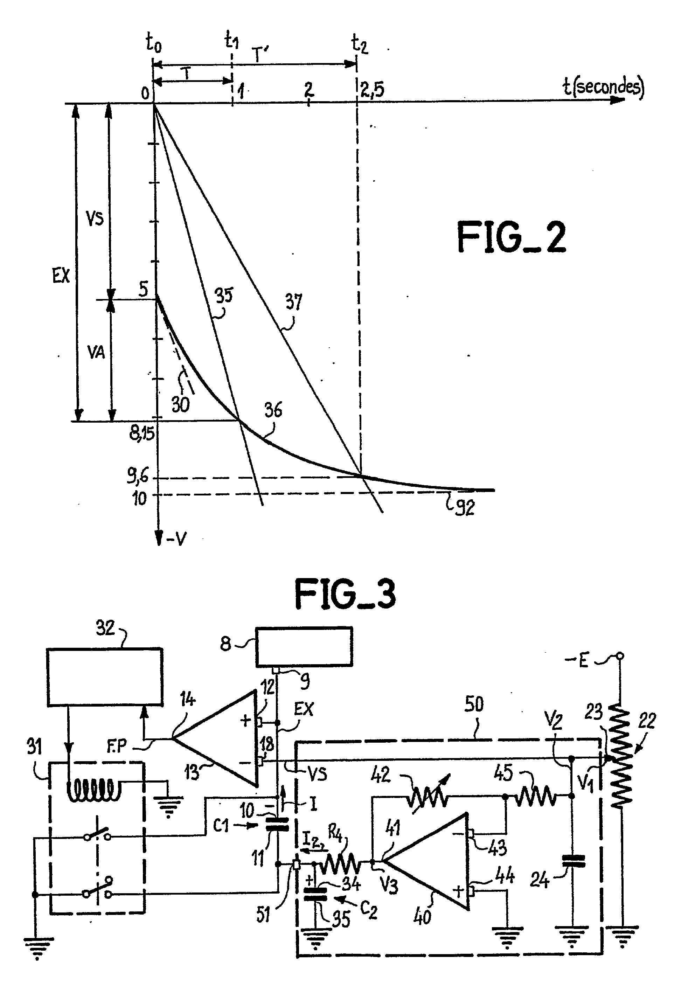

Ainsi à l'instant où débute le temps de pose T, la valeur du signal de consigne SC appliqué à l'entrée négative 18 du moyen comparateur 13 a une valeur de -5 volts, alors que la tension aux bornes du condensateur d'intégration C1, représentant le signal d'exposition EX, a une valeur nulle. Durant le temps de pose T, il y aura simultanément un accroissement dans le même sens, c'est-à-dire négatif par rapport à la masse dans l'exemple décrit, de la tension engendrée par la charge du condensateur d'intégration C1 et de la tension engendrée par la charge du condensateur de charge C2 ; la variation de la tension produite par la charge du premier condensateur C1 s'effectuant selon une loi linéaire en fonction du temps si le débit de dose ou courant I est constant durant le temps de pose. IL est à remarquer que dans l'exemple décrit, d'une part la résistance de charge R4 est ajustable, et permet ainsi de régler la constante de temps du circuit formé avec le second condensateur C2, de manière à ajuster la pente de départ (montrée à la figure 2) selon laquelle s'effectue la variation de la valeur additionnelle VA, constituée à partir de la tension développée par la charge du condensateur de charge C2, et que d'autre part, la troisième résistance R3 est ajustable également, de manière à régler la valeur atteinte à la sortie 28 du sommateur 20 par ladite valeur additionnelle VA, c'est-à-dire à régler la valeur asymptotique ; ceci permettant d'apporter des corrections à la courbe de variations (non représentée sur la figure 1) du signal de consigne SC, en fonction des caractéristiques du film radiographique 6 utilisé.

La figure 2 illustre le fonctionnement du dispositif exposeur automatique 1 selon l'invention, en montrant d'une part une première courbe 35 représentant la variation de valeur du signal d'exposition EX en fonction du temps t, et en montrant d'autre part une seconde courbe 36 représentant la variation de valeur du signal de consigne SC en fonction du temps t ; dans l'exemple non limitatif décrit, les valeurs atteintes, portées en ordonnées, sont exprimées par une tension négative - V, et représentent pour la première courbe 35 (signal d'exposition EX) la valeur de l'exposition atteinte par le couple écran-film 7-6.

En début du temps de pose T à un instant to, les condensateurs C1, C2 montrés à la figure 1 ne sont plus en court-circuit : la première courbe 35 montre que le signal d'exposition EX a une valeur nulle ; la seconde courbe 36 montre que le signal de consigne SC comporte une valeur de - 5 volts, correspondant à la tension fixe formant la valeur de seuil VS.

A partir de l'instant to : le signal d'exposition EX croit (négativement dans l'exemple non limitatif décrit) selon une pente directement proportionnelle au courant I et inversement proportionnelle à la valeur du condensateur d'intégration C1, et le signal de consigne SC croit selon une loi exponentielle correspondant à la valeur additionnelle VA engendrée par la charge du condensateur de charge C2. Si l'on ne tiend pas compte, pour plus de clarté de la description, du gain du générateur 16 et de l'inversion de polarité qu'il produit à la tension engendrée par la charge du condensateur de charge C2, et en supposant que le courant I correspondant au débit de dose soit constant durant le temps de pose T, l'égalité de valeur entre le signal d'exposition EX et le signal de consigne SC correspond à la relation suivante :

$$\frac{I}{C1} \times T = VS + V1\left(1 - \exp^{\frac{-T}{C2.R4}}\right);$$

où I est exprimé en ampère, C1 et C2 sont exprimés en farad, T est le temps de pose exprimé en seconde, VS est la valeur de seuil en volts, V1 exprimé en volts est la première tension délivrée par le curseur 23, R4 est la résistance en série avec le condensateur de charge C2, et est exprimée en ohm.

Dans l'exemple de la figure 2, d'une part, le condensateur d'intégration C1 a une valeur de l'ordre de $10^{-8}$ Farad, le courant I a une valeur constante de l'ordre de $8 \cdot 10^{-8}$ ampère : la première courbe 35 représentant le signal d'exposition EX constitue une droite partant de zéro à l'instant to pour atteindre une valeur de 8,15 V à l'instant t1, c'est-à-dire en 0,1 seconde ;
- d'autre part, dans l'exemple non limitatif décrit, le condensateur de charge C2 a une valeur de $2 \cdot 10^{-7}$ Farad, la résistance de charge R3 a une valeur de 10 MΩ, et la première tension V1 est de 5 V ; la charge du condensateur de charge C2 engendre une variation exponentielle montrée par la seconde courbe 36, qui, à partir de l'instant to s'ajoute à la valeur de seuil VS égale à 5 V, pour former la valeur de consigne SC ; c'est après 1 seconde à partir de l'instant to, que les signaux d'exposition EX et de consigne SC ont sensiblement une même valeur (8,15 V) et que s'achève le temps de pose T. La valeur d'exposition atteinte par le couple écran-film 7-6 correspond à 8,15 V, et la valeur additionnelle VA est constituée par la différence entre 8,15 et la valeur de seuil VS, soit 8,15 - 5 = 3,15 V.

En supposant que dans une pose suivante le courant I ait une valeur de $4 \cdot 10^{-8}$ ampère, le signal d'exposition EX croit selon une troisième courbe 37, et atteind une valeur sensiblement égale à celle du si-

5

EP 0 208 607 B1

gnal de consigne SC à un instant t2 situé 1,5 seconde après l'instant t1 ; le second temps de pose T' étant alors de l'ordre de 2,5 seconde.

Ainsi qu'il a été précédemment expliqué, le réglage de la résistance de charge R3 permet de régler la pente au départ 30, montrée en traits pointillés, et le réglage de la troisième résistance R4 permet d'ajuster la valeur asymptotique 92 montrée en traits pointillés. Ceci permet d'approcher au mieux la courbe (non représentée) représentant la variation relative de l'exposition nécessaire pour obtenir une densité optique constante, ainsi qu'il a été expliqué dans le préambule ; une telle courbe étant relevée expérimentalement pour un type de film donné.

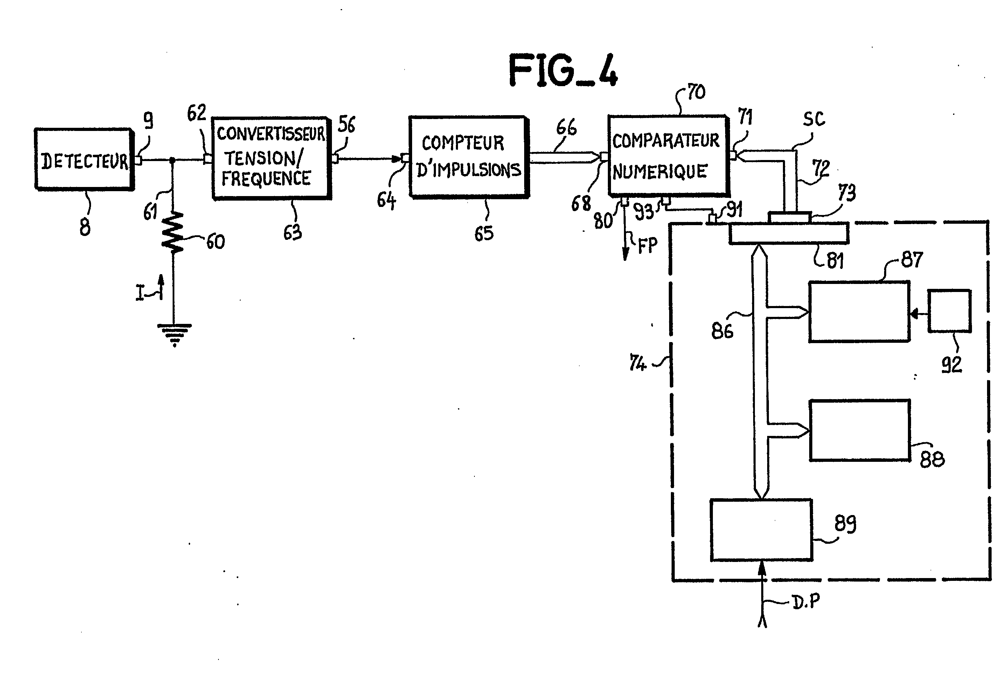

La figure 3 montre un second exemple de réalisation, dans lequel, au lieu d'ajouter la valeur additionnelle VA variable en fonction du temps, à la valeur de seuil VS pour rendre la valeur de consigne SC variable, on retranche cette valeur additionnelle VA de la valeur du signal d'exposition EX, c'est-à-dire de la tension développée par la charge du condensateur d'intégration C1 par le premier courant I.

Ainsi cette nouvelle manière d'opérer dans le procédé de l'invention relève de l'idée générale qui consiste à partir du début de temps de pose T, à ajouter à la valeur de différence VD représentée par la différence de valeur aux entrées 12, 18 du comparateur 13, c'est-à-dire à ajouter à la différence entre la valeur du signal d'exposition EX et à la valeur de consigne SC (formée dans ce cas uniquement par la valeur de seuil VS), la valeur additionnelle VA croissante en fonction du temps.

Le dispositif exposeur automatique 1 comporte à cet effet, ainsi que dans l'exemple précédent, des moyens (représentés dans un cadre en traits pointillés) pour accroître en fonction du temps ladite différence de valeur ; ces moyens étant dans l'exemple de la figure 3 affectés du repère 50.

Ainsi que dans l'exemple précédent, le condensateur d'intégration C1 est relié par sa première borne 10 à la sortie 9 du moyen détecteur 8 et à la première entrée 12 (positive) du moyen comparateur 13, afin d'intégrer dans le temps le premier courant I et à appliquer à la première entrée 12 la tension développée par la charge du premier courant I, c'est-à-dire le signal d'exposition EX. La seconde borne 11 du condensateur d'intégration C1 n'est pas reliée à la masse comme dans l'exemple précédent, mais à une sortie 51 des moyens 50 pour faire croitre ladite valeur de différence. Les moyens 50 comportent le condensateur de charge C2 précédemment mentionné, dont la première borne 34 est reliée à la sortie 51 c'est-à-dire à la deuxième borne 11 du condensateur d'intégration C1, et dont la deuxième borne 35 est reliée à la masse. La sortie 51, est reliée, à l'intérieur des moyens 50, par l'intermédiaire de la résistance de charge R4, à une sortie 41 d'un moyen amplificateur d'un type classique 40. La sortie 41 du moyen amplificateur 40 est reliée par une résistance ajustable 42 à une première entrée 43 (négative) du moyen amplificateur 40, la seconde entrée 44 (positive) du moyen amplificateur 40 est reliée à la masse ; la première entrée 43 (négative) étant en outre reliée par l'intermédiaire d'une résistance 45 au curseur 23 du potentiomètre 22. La première extrémité du potentiomètre 22 est relié à une source de tension négative - E, de moins 12 volt par exemple, la seconde extrémité étant reliée à la masse ; une capacité de filtrage 24 est reliée entre le curseur 23 et la masse, de manière à filtrer une seconde tension V2 délivrée par le curseur 23, comprise entre la masse et - 12 volts. La résistance 45 et la résistance ajustable 42 constituent un circuit de commande de gain permettant d'avoir à la sortie 41 du moyen amplificateur 40 une troisième tension V3 positive par rapport à la masse. De même que dans l'exemple précédent, les condensateurs d'intégration et de charge C1, C2 sont maintenus en court-circuit en dehors de temps de pose T, par des moyens classiques, tels que des relais élecroméaniques 31 par exemple. L'installation de radiodiagnostic étant semblable à celle montrée sur la figure 1, elle n'est pas représentée sur la figure 3, à l'exception du pupitre de commande 32 servant à la commande des relais électromagnétiques 31 et à la commande de fin de pose FP générée par la sortie 14 du moyen comparateur 13, d'une même manière que dans l'exemple de la figure 1.

Au début du temps de pose T, les condensateurs d'intégration et de charge C1, C2 n'étant plus en court-circuit, ils sont chargés simultanément durant toute la durée de la pose T. Il est à remarquer que les condensateurs C1 , C2 sont en série par rapport au premier courant I. Aussi la valeur du condensateur de charge C2 a été choisie grande (un rapport de 10 par exemple) devant la valeur du condensateur d'intégration C1, de manière que la tension engendrée par la charge du condensateur de charge C2 par le premier courant I soit négligeable. Le premier courant I charge le condensateur d'intégration C1 de sorte que sa première armature 10 soit négative par rapport à la masse, et simultanément, la troisième tension V3 positive, délivrée par la sortie 41 du moyen amplificateur 40, détermine à travers la résistance de charge R4 un second courant I2 qui charge le condensateur de charge C2 selon des polarités opposées à la charge délevoppée aux bornes 10, 11 du condensateur d'intégration C1 ; c'est-à-dire que la première armature 34 du condensateur de charge C2 est chargée positivment par rapport à la masse.

Dans cette configuration, la charge par le premier courant I du condensateur d'intégration C1 développe aux bornes 10, 11 de ce dernier une tension négative par rapport à la masse, correspondant au signal d'exposition EX, croissant dans le temps linéairement, et la charge par le second courant I2 du condensateur de charge C2 développe aux bornes 34, 35 de ce dernier une tension positive par rapport à la masse, croissante selon une loi exponentielle. Aussi, en valeur absolue, la tension appliquée à la première entrée 12 du moyen comparateur 13 résulte de la somme algébrique des tensions développées aux bornes du condensateur d'intégration C1 et aux bornes du condensateur de charge C2. La seconde entrée 18 (négative) du moyen comparateur 13 est reliée au curseur 23 du potentiomètre 22, la tension délivrée par le curseur 23 constitue la valeur de seuil VS, fixe, le signal de consigne SC ayant ainsi dans cet exemple une valeur fixe durant le temps de pose T.

Au début du temps de pose T, la tension appliquée à la première entrée 12 (positive) du moyen comparateur 13 est nulle, et la valeur de différence VD est donnée par la valeur de seuil VS. La charge simultanée selon des signes opposés des condensateurs d'intégration et de charge C1, C2 a pour effet de soustraire de la valeur du signal d'exposition (tension aux bornes de C1) la tension VA engendrée par la charge du second condensateur C2, ce qui conduit d'une même manière que dans l'exemple précédent à retarder l'instant où la comparaison par le moyen comparateur 13 indiquera que la valeur du signal d'exposition EX est sensiblement égale à la valeur du signal de consigne SC.

La figure 4 montre une variante de l'invention constituant une réalisation de type numérique.

Dans cette version, la sortie 9 du moyen détecteur 8 est reliée à la première extrémité 61 d'une résistance 60 dont la seconde extrémité est reliée à la masse. La première extrémité 61 de la résistance 60 est reliée en outre à une entrée 62 d'un convertisseur tension/fréquence 63, d'un type classique, de manière que la chute de tension provoquée par la résistance 61, engendre une fréquence (non représentée) liée à cette chute de tension. Une sortie 56 du convertisseur tension/fréquence 63 est reliée à l'entrée 64 d'un dispositif compteur d'impulsions 65 ; le nombre des impulsions par unités de temps, correspondant de manière classique à la fréquence engendrée par le convertisseur tension/fréquence 63. Le dispositif compteur d'impulsions 65 est d'un type classique tel que comportant par exemple une succession de bascules (non représentées) dont l'état respectif indique le nombre d'impulsions comptées ; l'état de ces bascules étant transmis par des liaisons représentées sur la figure 3 par une barre 66 à l'entrée 68 d'un moyen comparateur numérique 70 d'un type classique. Le moyen comparateur 70 reçoit d'autre part sur des entrées 71 une valeur transmise à l'aide de liaisons symbolisées par une deuxième barre 72 provenant de sorties 73 d'un dispositif générateur numérique 74, montré dans un cadre en traits pointillés. La valeur délivrée par le dispositif 74 varie en fonction du temps selon une courbe telle que la seconde courbe 36 correspondant au signal de consigne SC et montrée dans la figure 2 ; le dispositif générateur numérique 74 constituant un moyen pour générer et augmenter en fonction du temps le signal de consigne SC selon une loi exponentielle..

Lorsque la valeur du nombre d'impulsions délivrée par le dispositif de comptage 65 atteint une même valeur que la valeur de consigne SC délivrée par le dispositif générateur numérique 74, le comparateur numérique 70 délivre par une sortie 80 une commande de fin de pose FP qui, comme dans les exemples précédents, est appliquée au pupitre de commande 32 (non représenté sur la figure 4).

Une telle réalisation est particulièrement adaptée à être mise en oeuvre dans un système à microprocesseur d'une manière simple pour l'homme du métier. Le dispositif générateur numérique 74 peut comporter par exemple un moyen d'interface de sortie 81 délivrant le signal de consigne SC, ce moyen de sortie 81 étant relié par des liaisons montrées sous la forme d'une quatrième barre 86 d'une part, à une unité centrale 87 et d'autre part à des moyens de mémoire 88 dans lesquels sont stockées les différentes valeurs que comporte le signal de consigne SC en fonction du temps ; les liaisons 86 reliant en outre un moyen d'entrée 89 auquel est appliqué le signal de début de pose DP délivré par le pupitre de commande 32 précédemment mentionné (non représenté) ; le dispositif générateur numérique 74 comportant en outre de manière classique, une horloge 92 reliée à l'unité centrale 87.

Le procédé consiste alors à comparer les valeurs de nombres d'impulsions comptées par le dispositif de comptage 65, aux valeurs du signal de consigne SC à des intervalles de temps $\Delta T$ prédéterminés, constants par exemple, à l'occasion desquels une nouvelle valeur contenue dans les mémoires 88 est transférée par l'intermédiaire du moyen de sortie 81, au comparateur numérique 70 ; le moyen de sortie 81 étant par une sortie 91 relié en outre à une entrée 93 du dispositif comparateur 70, de manière à n'autoriser la comparaison que quand la valeur du signal de consigne SC est parfaitement établie.

Cette description, du procédé de l'invention et de l'exposeur automatique 1 mettant en oeuvre ledit procédé, constitue un exemple non limitatif, montrant la méthode et l'agencement de moyens nécessaires à compenser l'effet de l'écart de la loi de réciprocité, quand un film radiographique 6 est exposé au rayonnement X par l'intermédiaire d'un écran renforçateur 7.

## Revendications

1. Procédé automatique de détermination de l'exposition d'un film radiographique, dans lequel ledit film (6) forme avec un écran renforçateur (7) un couple écran-film (7-6) exposé à un rayonnement X (3) durant un temps de pose (T), consistant à générer un courant (I) proportionnel au débit de dose au niveau dudit couple écran-film (7-6), et à intégrer dans le temps ledit courant (I) à partir du début (to) dudit temps de pose (T), afin d'obtenir un signal d'exposition (EX) ayant une valeur croissante avec le temps représentant l'exposition dudit couple écran-film (7-6), et à appliquer ledit signal d'exposition (EX) à un moyen comparateur (13, 70) auquel est également appliqué un signal de consigne (SC) afin de comparer les valeurs desdits signaux d'exposition et de consigne (EX, SC), puis à délivrer une commande de fin de pose (FP) coupant ledit rayonnement X quand lesdits signaux (EX, SC) ont une valeur sensiblement égale, la différence de valeurs entre lesdits signaux d'exposition et de consigne (EX, SC) constituant une valeur de différence (VD) décroissante en fonction du temps, caractérisé en ce qu'il consiste en outre, à partir du début dudit temps de pose, à ajouter à ladite valeur de différence une valeur additionnelle (VA) croissante en fonction du temps selon une loi prédéterminée.

2. Procédé selon la revendication 1, caractérisé en ce que ladite valeur additionnelle (VA) est croissante selon une loi exponentielle.

3. Procédé selon l'une des revendications précédentes, caractérisé en ce que ledit signal d'exposition (EX) est appliqué à une première entrée (12) dudit moyen comparateur (13), et en ce que ledit signal de consigne (SC) est appliqué à une seconde entrée (18) dudit moyen comparateur (13), ledit signal de consigne (SC) étant constitué par une valeur de seuil, fixe (VS), à laquelle est ajoutée ladite valeur additionnelle (VA) croissante en fonction du temps.

4. Procédé selon l'une des revendications 1 ou 2, caractérisé en ce que ledit signal d'exposition (EX) est appliqué à une première entrée (12) dudit moyen comparateur (13) dont une seconde entrée reçoit une valeur de seuil, fixe (VS), et en ce que ladite valeur additionnelle (VA) croissante en fonction du temps est soustraite dudit signal d'exposition (EX).

5. Procédé selon la revendication 2, caractérisé en ce que ladite valeur additionnelle (VA) est obtenue en chargeant sous une tension constante (V1 , V3) un condensateur de charge (C2) à travers une résistance de charge (R4).

6. Procédé selon l'une des revendications précédentes, caractérisé en ce que le courant (I) proportionnel au débit de dose est intégré par un condensateur d'intégration (C1).

7. Procédé selon les revendications 6 et 5, caractérisé en ce que les condensateurs d'intégration et de charge (C1, C2) sont montés en série, et en ce que le condensateur de charge (C2) a une valeur grande par rapport au condensateur d'intégration (C1).

8. Procédé selon la revendication précédente, caractérisé en ce que les tensions (EX, VA) développées par la charge des condensateurs (C1, C2) ont des polarités opposées.

9. Dispositif exposeur automatique pour installation de radiodiagnostic, ladite installation de radiodiagnostic comportant un film radiographique (6) formant avec un écran renforçateur (7) un couple écran-film (7-6) exposé à un rayonnement X (3) durant un temps de pose (T), ledit dispositif exposeur (1) comportant :
- un moyen détecteur (8) sensible aux rayons X, et délivrant un courant (I) proportionnel au débit de dose au niveau dudit couple écran-film (7-6) ;
- un moyen intégrateur (C1, 61-63) intégrant dans le temps ledit courant (I) à partir du début (to) dudit temps de pose (T) et délivrant un signal d'exposition (EX) ayant une valeur croissante avec le temps représentant l'exposition dudit couple écran-film (7-6) ;
- un moyen comparateur (13, 70) comparant ledit signal d'exposition (EX) à un signal de consigne (SC) ayant au début (to) du temps de pose (T) une valeur (VS) non nulle ledit moyen comparateur (13, 70) délivrant un signal de fin de pose (FP) quand les valeurs desdits signaux d'exposition et de consigne (EX, SC) sont sensiblement égales ; ledit dispositif exposeur (1) étant caractérisé en ce qu'il comporte en outre des moyens (16,50,74) pour produire à partir du début (to) du temps de pose (T), une valeur additionnelle (VA) croissante en fonction du temps selon une loi prédéterminée, la valeur additionnelle (VA) étant ajoutée à la différence (VD) de valeur entre le signal d'exposition (EX) et le signal de consigne (SC).

10. Dispositif exposeur automatique selon la revendication 9, caractérisé en ce que les moyens pour produire ladite valeur additionnelle (VA) comportent un condensateur de charge (C2) chargé à travers une résistance de charge (R4) sous une tension constante (V1, V3), de manière que la valeur additionnelle (VA) varie en fonction du temps selon une loi exponentielle.

11. Dispositif exposeur automatique selon l'une des revendications 9 ou 10, caractérisé en ce que les moyens pour produire ladite valeur additionnelle (VA) comportent une source de tension (V1), reliée à un moyen sommateur (18) de manière à obtenir une valeur de seuil, fixe (VS) à laquelle est ajoutée ladite valeur additionnelle (VA) afin de constituer ledit signal de consigne (SC).

12. Dispositif exposeur automatique selon l'une des revendications 9 ou 10, ou 11, caractérisé en ce que ledit moyen intégrateur est constitué par un condensateur d'intégration (C1).

13. Dispositif exposeur automatique selon les revendications 10 et 12, caractérisé en ce que lesdits condensateurs d'intégration et de charge (C1, C2) sont montés en série, et en ce que ledit condensateur d'intégration (C1) a une valeur faible par rapport au condensateur de charge (C2).

14. Dispositif exposeur automatique selon la revendication précédente, caractérisé en ce que lesdits condensateurs (C1, C2) sont chargés selon des polarités opposées.

15. Dispositif exposeur automatique selon la revendication 10, caractérisé en ce que ladite résistance de charge (R4) est ajustable.

16. Dispositif exposeur automatique selon la revendication 9, lesdits moyens intégrateur (63, 65) et comparateur (70) étant du type numérique, caractérisé en ce que le signal de consigne (SC) est formé par une valeur de seuil fixe (VS) à laquelle est ajoutée la valeur additionnelle (VA) de manière à modifier la valeur du signal de consigne (SC) en fonction du temps selon une courbe (36) prédéterminée, le signal de consigne (SC) étant produit par un générateur (74) comportant une unité de mémoire (88) dans laquelle sont stockées les valeurs de la courbe (36).

## Claims

1 An automatic method for determining the exposure of a radiographic film, wherein the said film (6) and an intensifying screen (7) together form a screen-film pair (7-6) exposed to x-ray radiation (3) during a sitting time (T), consisting in generating a current (I) proportional to the dosage rate at the level of the said screen-film pair (7-6), and in integrating in time the said current (I) from the start (to) of the said sitting time (T) in order to obtain an exposure signal (EX) having a value increasing with the time representing the exposure of the said screen-film pair (7-6), and in applying the said exposure signal (EX) tc a comparison means (13 and 70) to which there is also applied a set point signal (SC) in order to compare the values of the said exposure signals and set point signals (EX and SC), and the supplying an end of sitting signal (FP) cutting off the said x-ray radiation when the said signals (EX and SC) have a substantially equal value, the difference of the values between the said exposure signals and set point signals (EX and SC) constituting a difference value (VD) decreasing as a function of time, characterized in that the method furthermore consists in adding, as from the start of the said sitting time, to the said difference value an additional value (VA) increasing as a function of time in accordance with a predetermined law.

2 The method as claimed in claim 1, characterized in that the said additional value (VA) increases in accordance with an exponential law.

3 The method as claimed in either of the preceding claims, characterized in that the said exposure signal (EX) is applied to a first input (12) of the said comparison means (13) and in that the said set point signal (SC) is applied to a second input (18) of the said comparison means (13), the said set point signal (SC) being constituted by a threshold value, a fixed value (VS), to which there is added the said additional value (VA) increasing as a function of time.

4 The method as claimed in claim 1 or claim 2, characterized in that the said exposure signal (EX) is applied to a first input (12) of the said comparison means (13), of which a second input receives a threshold value, which is fixed (VS), and in that the said additonal value (VA) increasing as a function of time is subtracted from the said exposure signal (EX).

5 The method as claimed in claim 2, characterized in that the said additional value (VA) is obtained by charging a charge capacitor (C2) at a constant voltage (V1 and V3) via a charge resistor (R4).

6 The method as claimed in any one of the preceding claims, characterized in that the said current (I) proportional the dosage rate is integrated by an integrating capacitor (C1).

7 The method as claimed in the claims 6 and 5, characterized in that the integration and charge capacitors (C1 and C2) are placed in series and the charge capacitor (C2) has a large value in relation to the integration capacitor (C1).

8 The method as claimed in the preceding claim, characterized in that the voltages (EX and VA) developed by the charge of the capacitors (C1 and C2) have opposite polarities.

9 An automatic exposing device for radiodiagnostic equipment, the said radiographic equipment comprising a radiographic film (6) forming a screen-film pair (7-6) with an intensifying screen (7), said pair being exposed to x-ray radiation (3) during a sitting time (T), the said exposing device (1) comprising:
- a detector means (8) sensitive to x-rays and delivering a current (I) proportional to the dosage rate at the level of the said screen-film pair (7-6);
- an integrating means (C1 and 61-63) integrating in time the said current (I) as from the start (to) of the said sitting time (T) and delivering an exposure signal (EX) having a value increasing with time representing the exposure of the said screen-film pair (7-6):
- a comparison means (13 and 70) comparing the said exposure signal (EX) with a set point signal (SC) which at the start (to) of the sitting time (T) has a value (VS) other than zero, the said comparison means (13 and 70) delivering an end of sitting signal (FP) when the values of the said exposure and set point signals (EX and SC) are substantially equal to each other; the said exposing device (1) being characterized in that it furthermore comprises means (16, 50 and 74) in order to produce, as from the start (to) of the sitting time (AT), an additional value (VA) increasing as a function of time in accordance with a predetermined law, the additional value (VA) being added to the difference (VD) of the value between the exposure signal (EX) and the set point signal (SC).

10 The automatic exposure device as claimed in claim 9, characterized in that the means on order to produce the said additional value (VA) comprises a charge capacitor (C2) charged via a charge resistor (R4) at a constant voltage (V1 and V3) in such a manner that the additional value (VA) varies as a function of the time in accordance with an exponential law.

11 The automatic exposure device as claimed in either claim 9 or claim 10, characterized in that the means for producing the said additional value (VA) comprise a voltage source (V1), connected with a summating means (18) in such a manner as to obtain a fixed threshold value (VS) to which there is added the said additional value (VA) in order to constitute the said set point signal (SC).

12 The automatic exposure device as claimed in any one of the claims 9 through 11, characterized in that the said integrating means is constituted by an integrating capacitor (C1).

13 The automatic exposure device as claimed in claims 10 and 12, characterized in that the said integrating and charge capacitors (C1 and C2) are placed in series and in that the said integrating capacitor (C1) has a low value in comparison with the charge capacitor (C2).

14 The automatic exposing device as claimed in the preceding claim characterized in that the said capacitors (C1 and C2) are charged with opposite polarities.

15 The automatic exposure device as claimed in claim 10, characterized in that the said charge resistor (R4) is adjustable.

16 The automatic exposing device as claimed in claim 9, the said integrating means (63 and 65) and comparison means (70) being of the digital type, characterized in that the said set point signal (SC) is formed by a fixed threshold value (VS) to which there is added the additional value (VA) in such a manner as to modify the value of the set point signal (SC) as a function of the time in accordance with a predetermined curve (36), the set point signal (SC) being produced by a generator (74) comprising a memory unit (33) in which the values of the curve (36) are stored.

**Patentansprüche**

1. Verfahren für die automatische Bestimmung der Belichtung eines Röntgenfilmes, in welchem der Film (6) eine Schirm-Film-Einheit (7-6) mit einem Verstärkerschirm (7) bildet, die während einer Belichtungszeit (T) einer Röntgenstrahlung (3) ausgesetzt wird, wobei dieses Verfahren darin besteht, einen Strom (1) zu erzeugen, der zu der Dosis- Menge an der Schirm-Film-Einheit (7, 6) proportional ist, und diesen Strom (1) ab dem Anfang (to) dieser Belichtungszeit (T) über die Zeit zu integrieren, um ein Belichtungssignal (EX) zu erhalten, das einen mit der Zeit wachsenden Wert hat, die die Belichtung dieser Schirm-Film-Einheit (7, 6) darstellt, und dieses Belichtungssignal (EX) an ein Komparatormittel (13, 70) anzulegen, an welches ferner ein Sollsignal (SC) angelegt wird, um die Werte der Belichtungssignale (EX) und der Sollsignale (SC) miteinander zu vergleichen, und dann eine Steuerung (FP) zur Beendigung der Belichtung abzugeben, welche die Röntgenstrahlung abstellt, wenn die Signale (EX, SC) einen im wesentlichen gleichen Wert aufweisen, wobei der Unterschied der Werte zwischen dem Belichtungssignal (EX) und dem Sollsignal (SC) einen Unterschiedswert (VD) bildet, der in Abhängigkeit von der Zeit abnimmt, dadurch gekennzeichnet, daß es ferner, ausgehend von dem Anfang der Belichtungszeit darin besteht, diesem Unterschiedswert einen Zusatzwert (VA) hinzuzufügen, der in Abhängigkeit von der Zeit gemäß einem vorbestimmten Gesetz wächst.

2. Verfahren nach Anspruch 1, dadurch gekennzeichnet, daß der Zusatzwert (VA) nach einem Exponentialgesetz wächst.

3. Verfahren nach einem der vorstehenden Ansprüche, dadurch gekennzeichnet, daß das Belichtungssignal (EX) an einen ersten Eingang (12) des Komparatormittels (13) und daß das Sollsignal (SC) an einen zweiten Eingang (18) des Komparatormittels (13) angelegt wird, wobei das Sollsignal (SC) aus einem festen Schwellenwert (VS) besteht, dem der in Abhängigkeit von der Zeit wachsende Zusatzwert (VA) hinzugefügt wird.

4. Verfahren nach Anspruch 1 oder 2, dadurch gekennzeichnet, daß das Belichtungssignal (EX) an einen ersten Eingang (12) des Komparatormittels (13) angelegt wird, wovon ein zweiter Eingang einen festen Schwellenwert (VS) empfängt, und daß der in Abhängigkeit von der Zeit wachsende Zusatzwert (VA) von dem Belichtungssignal (EX) abgezogen wird.

5. Verfahren nach Anspruch 2, dadurch gekennzeichnet, daß der Zusatzwert dadurch erhalten wird, daß ein Ladekondensator (C2) mittels eines Ladewiderstands (R4) unter einer konstanten Spannung (V1, V3) geladen wird.

6. Verfahren nach einem der vorstehenden Ansprüche, dadurch gekennzeichnet, daß der zu der Dosis-Menge proportionale Strom (1) durch einen Integrationskondensator (C1) integriert wird.

7. Verfahren nach den Ansprüchen 5 und 6, dadurch gekennzeichnet, daß der Integrationskondensator (C1) und der Ladekondensator (C2) in Serie geschaltet sind und daß der Ladekondensator (C2) einen in bezug auf den Integrationskondensator hohen Wert aufweist.

8. Verfahren nach dem vorstehenden Anspruch, dadurch gekennzeichnet, daß die durch die Ladung der Kondensatoren (C1, C2) entwickelten Spannungen (EX, VA) entgegengesetzte Polaritäten aufweisen.

9. Automatische Belichtungsvorrichtung für eine Radiodiagnostikanlage, wobei letztere einen Röntgenfilm (6) umfaßt, der mit einem Verstärkerschirm (7) eine Schirm-Film-Einheit (7-6) bildet, die während einer Belichtungszeit (T) einer Röntgen-Strahlung (3) ausgesetzt wird, wobei diese Belichtungsvorrichtung (1) umfaßt:
- ein Detektormittel (8), das für die Röntgen-Strahlen empfindlich ist und einen Strom (1) abgibt, der zu der Dosis-Menge an der Schirm-Film-Einheit (7-6) proportional ist;
- ein Integrationsmittel (C1, 61-63), das den Strom (1) ausgehend von dem Anfang (to) der Belichtungszeit (T) über die Zeit integriert und ein Belichtungssignal (EX) abgibt, das mit der Zeit, die die Belichtung der Schirm-Film-Einheit (7-6) darstellt, einen wachsenden Wert aufweist;
- ein Komparatormittel (13, 70), das das Belichtungssignal (EX) mit einem Sollsignal (SC) vergleicht, das am Anfang (to) der Belichtungszeit (T) einen nicht verschwindenden Wert (VS) aufweist, wobei das Komparatormittel (13, 70) ein Signal (FP) für die Belichtungsbeendigung abgibt, wenn die Werte des Belichtungssignals (EX) und des Sollsignals (SC) annähernd gleich sind, wobei die Belichtungsvorrichtung (1) dadurch gekennzeichnet ist, daß sie ferner Mittel (16, 50, 74) für die Erzeugung eines Zusatzwerts (VA) ab dem Anfang (to) der Belichtungszeit (T) umfaßt, der in Abhängigkeit von der Zeit gemäß einem vorbestimmten Gesetz wächst, wobei der Zusatzwert (VA) zu dem Wertunterschied (VD) zwischen dem Belichtungssignal (EX) und dem Sollsignal (SC) hinzugefügt wird.

10. Automatische Belichtungsvorrichtung nach Anspruch 9, dadurch gekennzeichnet, daß die Mittel zum Erzeugen des Zusatzwertes (VA) einen Ladekondensator (C2) umfassen, der mittels eines Ladewiderstandes (R4) unter einer konstanten Spannung (V1, V3) so geladen wird, daß der Zusatzwert (VA) gemäß einem Exponentialgesetz in Abhängigkeit von der Zeit variiert.

11. Automatische Belichtungsvorrichtung nach Anspruch 9 oder 10, dadurch gekennzeichnet, daß die Mittel zum Erzeugen des Zusatzwertes (VA) eine Spannungsquelle (V1) umfassen, die mit einer Summiereinrichtung (18) so verbunden ist, daß ein fester Schwellenwert (VS), zu dem der Zusatzwert (VA) hinzugefügt wird, um das Sollsignal (SC) zu bilden, erreicht wird.

12. Automatische Belichtungsvorrichtung nach einem der Ansprüche 9, 10 oder 11, dadurch gekennzeichnet, daß das Integrationsmittel aus einem Integrationskondensator (C1) besteht.

13. Automatische Belichtungsvorrichtung nach den Ansprüchen 10 und 12, dadurch gekennzeichnet, daß der Integrationskondensator (C1) und der Ladekondensator (C2) in Serie geschaltet sind und daß der Integrationskondensator (C1) einen in Bezug auf den Ladekondensator (C2) geringen Wert aufweist.

14. Automatische Belichtungsvorrichtung nach dem vorstehenden Anspruch, dadurch gekennzeichnet, daß die Kondensatoren (C1, C2) mit ungleichnamiger Polarität geladen werden.

15. Automatische Belichtungsvorrichtung nach Anspruch 10, dadurch gekennzeichnet, daß der Ladewiderstand (R4) einstellbar ist.

16. Automatische Belichtungsvorrichtung nach Anspruch 9, wobei das Integrationsmittel (63, 65) sowie das Komparatormittel (70) digitaler Art sind, dadurch gekennzeichnet, daß das Sollsignal (SC) durch einen festen Schwellenwert (VS), welchem der Zusatzwert (VA) hinzugefügt wird, gebildet ist, so daß der Wert des Sollsignals (SC) in Abhängigkeit von der Zeit gemäß einer vorbestimmten Kurve (36) verändert wird, wobei das Sollsignal (SC) durch einen Generator (74) erzeugt wird, der eine Speichereinheit (88), in welcher die Werte der Kurve (36) gespeichert sind, umfaßt.

FIG_1

# FIG_2

# FIG_3

# FIG_4

DETECTEUR

CONVERTISSEUR TENSION/ FREQUENCE

COMPTEUR D'IMPULSIONS

COMPARATEUR NUMERIQUE

SC

FP

D.P

EP 0 208 607 B1